Europäisches Patentamt

European Patent Office

Office européen des brevets

(19)

(11) EP 0 519 768 B1

(12) FASCICULE DE BREVET EUROPEEN

(45) Date de publication et mention
de la délivrance du brevet:
**18.06.1997 Bulletin 1997/25**

(51) Int Cl.6: **G11B 7/00**, G11B 7/24,
G11B 11/10

(21) Numéro de dépôt: **92401336.0**

(22) Date de dépôt: **15.05.1992**

(54) **Support d'informations à stockage haute densité et procédé de lecture d'un tel support**

Aufzeichnungsträger mit hoher Speicherdichte und Verfahren zum Auslesen eines solchen Trägers

High density information storage carrier and method of reading such a carrier

(84) Etats contractants désignés:
**DE GB NL**

(30) Priorité: **21.05.1991 FR 9106111**

(43) Date de publication de la demande:
**23.12.1992 Bulletin 1992/52**

(73) Titulaire: **THOMSON-CSF**
**75008 Paris (FR)**

(72) Inventeurs:
• **Puech, Claude**
**F-92045 Paris la Défense (FR)**
• **Huignard, Jean-Pierre**
**F-92045 Paris la Défense (FR)**
• **Papuchon, Michel**
**F-92045 Paris la Défense (FR)**
• **Loiseaux, Brigitte**
**F-92045 Paris la Défense (FR)**

(74) Mandataire: **Guérin, Michel et al**
**THOMSON-CSF-S.C.P.I.,**
**13, Avenue du Président**
**Salvador Allende**
**94117 Arcueil Cédex (FR)**

(56) Documents cités:
EP-A- 0 343 727        EP-A- 0 354 601
GB-A- 2 130 423

• PATENT ABSTRACTS OF JAPAN, vol. 15, no. 95
(P-1176)(4623), 7 mars 1991; & JP-A- 2 308 439
• JOURNAL OF APPLIED PHYSICS, vol. 63, no. 11,
1 juin 1988, pages 5495-5499, Woodbury, NY, US;
L.M. WALPITA: "Anomalous electroabsorption
in semi-insulating GaAs"
• PHILIPS TECHNICAL REVIEW, vol. 42, no. 2, août
1985, pages 37-47, Eindhoven, NL; M.
HARTMANN et al.: "Erasable magneto-optical
recording"

## Description

La présente invention concerne, le stockage d'informations par voie optique et plus particulièrement la lecture de ces informations.

Dans les technologies de stockage optique de l'information, la densité maximale stockable est limitée par la diffraction à la longueur d'onde de l'écriture ou de la lecture. Pour les longueurs d'ondes optiques disponibles commercialement sous forme de diodes laser, on peut situer à titre d'exemple cette limite de densité aux alentours du bit par micromètre-carré. Avec les nouvelles sources laser bleues émettant vers 0,4-0,5 µm il devient possible d'augmenter le stockage des informations de façon conséquente, typiquement un facteur 4 à 5 en densité d'informations est attendu comparativement aux sources actuelles émettant dans le proche infrarouge. Cependant, même ces systèmes de stockage ne semblent pas devoir permettre des densités surfaciques d'informations adaptées au stockage des signaux de télévision haute définition de durée suffisante pour des applications Grand Public.

Dans ce contexte, plus récemment des systèmes basés sur le stockage volumique ont été proposés. Ces systèmes devraient permettre de gagner un facteur de plusieurs dizaines en densité surfacique d'informations mais cela avec l'inconvénient d'une complexité nettement accrue.

Un procédé d'écriture optique capable de générer des supports d'information à haute densité de stockage surfacique est connu de l'art antérieur, par exemple de EP-A-0 343 727. La présente invention propose un procédé de lecture d'un support d'informations à haute densité de stockage surfacique.

Actuellement les solutions permettant un stockage surfacique sont limitées par des problèmes de diffraction.

En effet lorsqu'un faisceau laser d'écriture est focalisé à la surface d'un support, il ne l'est pas en un point mais dans une région dans laquelle la distribution de densité de puissance est celle indiquée à la figure la. Elle est définie par l'équation surfacique suivante

$$D(x,y) = [2\,J1(Z)]^2/Z^2$$

avec

$$Z = 2\pi\,(x^2+y^2)^{1/2}\,(\text{Sin A})/L$$

où

J1 est la fonction de Bessel du premier ordre

x et y des coordonnées surfaciques.

où L est la longueur d'onde du faisceau incident

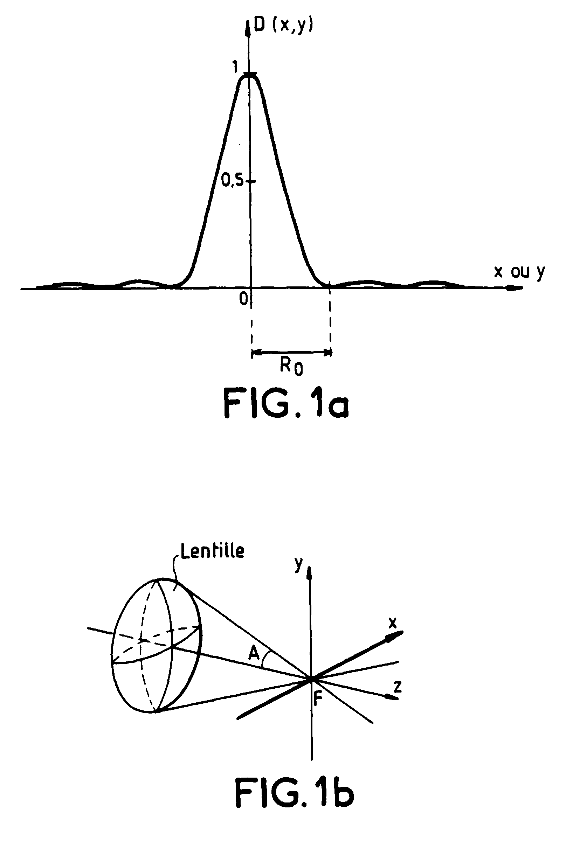

A est l'angle définissant le foyer de la lentille utilisée pour la convergence du faisceau (cet angle est représenté à la figure 1b). C'est l'angle d'ouverture de la lentille de focalisation.

Ainsi la tache de focalisation appelée tache D'Airy montre que sa base est définie par un rayon $R_o$ avec

$$R_o = 1,22\,L/2\,\sin A$$

Ces relations sont valables dans le cas d'un éclairement uniforme de la pupille de l'objectif et pour un rayonnement moins chromatique. En pratique, le faisceau laser ayant une répartition gaussienne, l'éclairement dans la pupille de l'objectif est une gaussienne tronquée. De plus, il a une certaine largeur spectrale. La répartition d'éclairement au foyer de l'objectif n'est pas exactement une fonction d'Airy, mais l'approximation faite ici est suffisante pour être considérée comme représentative du phénomène réel.

Dans le cas extrême d'une ouverture de focalisation maximale (A=90°) $R_{om} = 1,22\,L/2$. Cependant pour une ouverture plus raisonnable donc une profondeur de champ moins faible, la base de la tache d'Airy a un rayon supérieur à $R_{om}$. Le rayon $R_{om}$ correspond plutôt à la dimension de tache à mi hauteur de la courbe $D(x,y)$ et permet de définir l'étendue d'une information inscrite avec une densité de puissance suffisante. Ainsi typiquement en utilisant un faisceau d'inscription focalisé à la longueur d'onde L on ne peut inscrire des informations ayant une dimension latérale inférieure à L.

Pour résoudre ce problème, certains auteurs ont pensé utiliser un matériau fortement non linéaire comme support d'enregistrement pour inscrire des informations de très petite taille comme cela est notamment décrit dans le document EP-A-0 343 727.

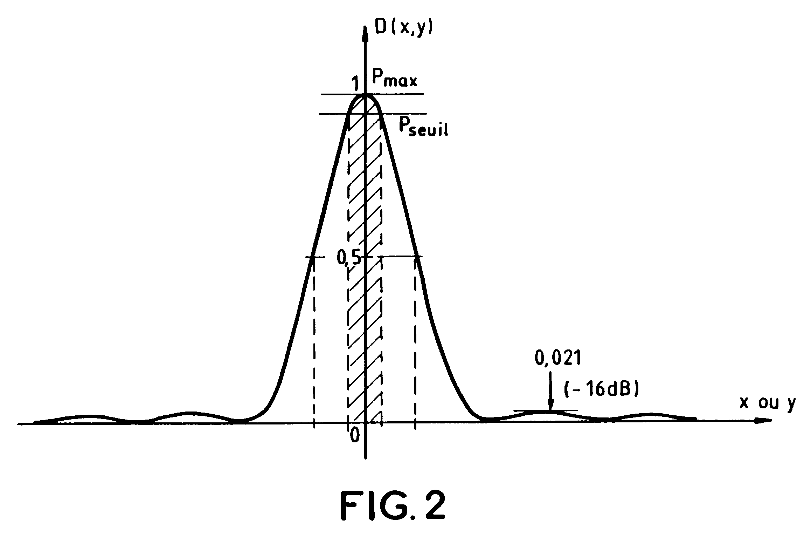

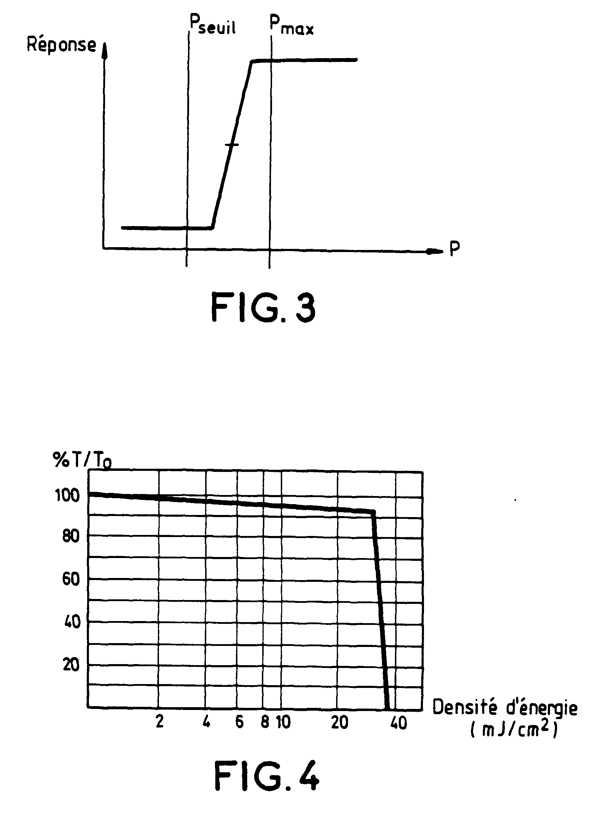

Plus précisément, il est proposé d'utiliser un matériau fortement non linéaire optiquement Ma et un faisceau laser focalisé ayant une densité de puissance maximale Pmax telle que la densité de puissance seuil Pseuil du matériau Ma soit légèrement inférieure à Pmax. La figure 2 montre que l'on peut exploiter la partie supérieure de la courbe D (x, y). On s'intéresse aux régions dans lesquelles une petite variation de la densité de puissance d'inscription entraîne des diminutions conséquentes au niveau de la surface des informations inscrites. La réponse optique du matériau Ma doit être la plus fortement non linéaire possible et les densités de puissance Pmax et Pseuil sont accordées de manière à être de part et d'autre du point d'inflexion de la courbe illustrant la réponse optique du matériau Ma avec la densité de puissance qu'il reçoit. Cette courbe est schématisée à la figure 3. la partie hachurée de la figure 2 correspond à des zones dans lesquelles le matériau s'est transformé optiquement et qui définissent les régions dans lesquelles il y a eu inscription d'informations.

Dans ce contexte, l'invention propose d'associer à la couche de matériau ma, une couche de matériau Mb, qui facilitera la lecture d'un tel support d'informations.

Plus précisément l'invention a pour objet un support d'informations comprenant un substrat et une première couche de matériau Ma à sensibilité optique fortement non linéaire dans laquelle sont inscrites des informations, caractérisé en ce que la première couche de matériau Ma est déposée à la surface d'une seconde couche de matériau Mb capable de générer une émission stimulée, ledit matériau Mb de la seconde couche étant déposé sur le substrat.

L'invention a aussi pour objet un procédé de lecture optique d'un support d'informations comprenant une première couche de matériau Ma présentant une sensibilité optique fortement non linéaire, dans laquelle sont inscrites des informations dans des premières régions Ra transparentes à une longueur d'onde $L_1$, superposée à une seconde couche de matériau Mb capable de générer une émission stimulée, caractérisé en ce qu'il comprend les étapes suivantes :

- la focalisation d'un faisceau de lecture de longueur d'onde $L_1$ à la surface de secondes régions Rb du matériau Mb de la seconde couches, lesdites secondes régions Rb étant en regard des premières régions Ra ;
- la détection d'une émission stimulée au niveau des secondes régions Rb, de manière à détecter les informations inscrites dans les premières régions Ra.

Avantageusement, la focalisation du faisceau de lecture à la longueur d'onde $L_1$ est telle que la densité de puissance au centre du faisceau dépasse la puissance seuil (puissance du matériau de la couche inférieure, au-delà de laquelle il y a émission stimulée) uniquement dans une petite zone de surface plusieurs fois supérieure à la surface de la tâche de focalisation du faisceau laser sur la couche de matériau Mb.

De préférence le matériau Ma peut être une résine photosensible ou un matériau magnétooptique ou un matériau métallique ou un matériau à transition de phase.

La détection d'information est faite par la détection de présence ou absence d'une émission stimulée.

Le matériau Ma employé peut être métallique, les régions Ra peuvent être des trous et le matériau Mb peut être aussi bien un semiconducteur qu'un polymère dopé avec un colorant ou qu'un verre ou un cristal dopé avec des terres rares.

La présente invention sera mieux comprise et d'autres avantages apparaîtront à la lecture de la description qui suit et des figures annexées parmi lesquelles :

- la figure 1 montre la distribution de densité de puissance d'un faisceau laser focalisé par une lentille L ;

  . la figure 1a donne l'allure de la courbe de distribution en fonction d'une des dimensions x ou y de la surface sur laquelle il y a focalisation ;
  . la figure 1b définit l'angle A correspondant au foyer de la lentille L, cet angle intervenant directement dans la détermination de la base de la courbe représentée à la figure 1a;

- la figure 2 permet de situer sur une courbe de densité de puissance de faisceau focalisé, la densité de puissance seuil au delà de laquelle le matériau optiquement non linéaire (utilisé dans l'invention) se transforme ;
- la figure 3 schématise la réponse optique du matériau (Ma) en fonction de la densité de puissance qu'il reçoit ;
- figure 4 illustre la réponse optique fortement non linéaire d'une résine photosensible pouvant être utilisée dans l'invention ;
- figure 5 montre le cycle d'hysteresis décrit par l'aimantation d'un matériau magnétique pouvant être utilisé dans l'invention en fonction du champ appliqué ;
- la figure 6 illustre un exemple de dispositif permettant l'inscription d'informations sur un disque plan ;
- figure 7 illustre un exemple de dispositif de lecture selon l'invention.

Un procédé d'écriture optique sur un support comprenant une couche de matériau (Ma) dont la réponse optique est fortement non linéaire est décrit ci-après; le matériau (Ma) peut être une résine photosensible dont le développement chimique permet d'atteindre une résolution submicronique. La réponse de certaines résines photosensibles peut être de plus fortement non linéaire comme en témoigne la figure 4. Il s'agit d'une résine Shipley S1400 révélée avec un développeur MF 314, To étant l'épaisseur initiale, T étant l'épaisseur après insolation. La courbe représentée à la figure 4 montre l'évolution du rapport % T/To en fonction de la densité d'énergie reçue par la résine. Le comportement de ce matériau est particulièrement intéressant pour définir une densité de puissance du faisceau laser d'écriture focalisé proche de la densité de puissance seuil de la résine photosensible utilisée.

Le matériau (Ma) peut être un matériau dans lequel une variation d'indice de réfraction peut être photoinduite. Un des intérêts de tels matériaux est qu'ils peuvent enregistrer une information sous forme optique sans passer par une phase de développement chimique. Il peut s'agir par exemple de photopolymère.

Les résines photosensibles ou les photopolymères peuvent être facilement déposés sur tout substrat par la méthode de centrifugation. L'épaisseur de la couche de matériau (Ma) est aisément ajustable par la détermination de la vitesse de centrifugation et par celle de la concentration de la solution initiale de matériau (Ma).

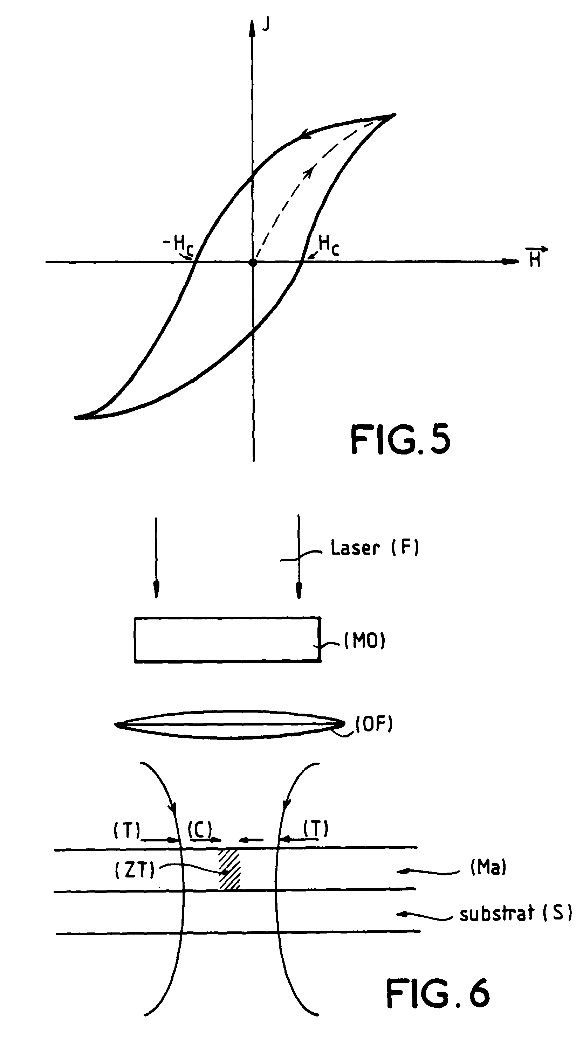

Le matériau (Ma) peut également être un matériau magnétooptique. Sous l'action d'un faisceau laser, le matériau magnétooptique s'échauffe, l'élévation locale de température entraîne des variations du paramètre magnétique et le bit d'information est défini par la zone dans laquelle l'aimantation préalablement orientée prend une direction antiparallèle. Plus précisément, la couche de matériau (Ma) peut être préalablement amenée à saturation par application d'un champ magnétique extérieur supérieur au champ coercitif à l'ambiante (le champ coercitif Hc correspond au champ capable d'annuler l'aimantation induite et est illustré par le cycle d'hysteresis de la figure 5 donnant l'évolution de l'aimantation J avec le champ magnétique H). Puis on applique dans le plan de la couche un champ extérieur inférieur au champ coercitif de direction opposée à celle du champ de saturation. Lorsque l'échauffement provoqué par le laser, amène le matériau (Ma) au-delà de la température de Curie Tc (température pour laquelle le comportement du matériau devient paramagnétique), l'aimantation bascule dans une direction antiparallèle, définissant ainsi un bit. La transformation du matériau magnétooptique ne s'effectue donc que lorsque la densité de puissance qu'il reçoit est supérieure à une certaine densité de puissance seuil correspondant à un échauffement du matériau tel que ce dernier soit porté à une température supérieure à la température de Curie Tc.

Les couches de matériaux magnétooptiques peuvent être réalisées à partir de cobalt combiné à du chrome ou du nickel ou bien encore du phosphore. Le matériau manganèse-bismuth présente également de part le système hexagonal dans lequel il cristallise des propriétés magnétiques intéressantes. Le tableau I illustre des exemples de réalisation de support réalisés en matériau magnétooptique dont le procédé de dépôt dépend de la nature du matériau

TABLEAU I

| MATERIAU | EPAISSEUR nm | SUBSTRAT | FABRICATION |
|---|---|---|---|
| Chrome-Cobalt | 80 | Verre+or | Dépôt sous vide |
| Chrome-Phosphore | 60 | Verre+or | Electrolyse |
| Manganèse-Bismuth | 70 | Verre | Dépôt sous vide |

Quel que soit le matériau (Ma) déposé sur son substrat, l'inscription d'informations peut se faire avec un laser de courte longueur d'onde (par exemple un laser argon bleu émettant à 457,9 nm) ou une source cohérente obtenue par doublage de fréquence d'un laser semi-conducteur ou d'un laser solide du type néodyne YAG focalisé à la surface de la couche de matériau (Ma). En ajustant convenablement la densité de puissance maximale du faisceau optique focalisé on peut inscrire des informations inférieures à 0,2 μm.

Le procédé d'inscription peut être réalisé sur des média sous forme de disques, de cartes (type carte de crédit) ou bien de bandes.

La figure 6 illustre un exemple de dispositif permettant l'inscription d'informations sur un disque support plan pouvant être mis en rotation autour d'un axe.

Pour l'enregistrement composé d'un faisceau laser (F) focalisé par l'intermédiaire d'un objectif de focalisation (OF) sur la couche de matériau (Ma) déposé sur un substrat (S). Le faisceau laser focalisé génère une tache de focalisation (T) dont seule une partie centrale (C) crée une transformation du matériau (Ma) correspondant à l'information inscrite. La zone transformée (ZT) est de dimensions latérales plusieurs fois inférieures à celles de la tache (T). Cela suppose que la densité de puissance au centre de la tache soit peu supérieure à la densité de puissance de seuil de réaction du matériau , par exemple au maximum 20 % supérieure. L'optique de focalisation est déplaçable radialement par rapport au disque (d'une manière classique) pour que toute la surface utile du disque puisse être balayée par le faisceau laser d'enregistrement. La modulation du faisceau d'enregistrement selon le signal à inscrire sur le média peut être obtenue de plusieurs manières. Dans un premier mode de réalisation, un modulateur de lumière (cellules de Pockels ou autre) est interposé sur le trajet du faisceau laser. Ce modulateur (MO) est commandé pour laisser passer ou interrompre le faisceau selon l'information à inscrire. Dans un second mode de réalisation, le laser lui-même peut être modulé (laser semi-conducteur en particulier par modulation du courant d'injection). En effet, les informations peuvent être de type binaire, chaque inscription par la partie utile du faisceau laser focalisé représentant un bit d'information ou bien les informations peuvent être de type analogique et dans ce cas l'information utile est représentée par la longueur d'une zone modifiée par le faisceau laser ou encore la distance séparant deux modifications locales successives de la couche de matériau (Ma).

Une synchronisation est prévue entre la commande de modulation et le déplacement relatif du disque et de la tâche de focalisation pour que les informations soient inscrites avec une répartition spatiale bien déterminée. En inscrivant des informations dont une des dimensions latérales est inférieure à une demi-longueur d'onde d'enregistrement, il devient possible d'obtenir également un espacement entre points enregistrés inférieur à la demi-longueur d'onde.

En ajustant au mieux la densité de puissance maximale du faisceau laser focalisé et la densité de puissance seuil du matériau (Ma) il devient possible d'inscrire des informations de l'ordre de 0,1 µm séparées par une distance équivalente de l'ordre de 0,1 à 0,15 µm. Une telle configuration permet d'accéder à une densité surfacique de $2.10^9$ à $2,5.10^9$ bits/cm$^2$.

Une telle densité surfacique d'informations permet d'envisager l'enregistrement optique dans le domaine de la télévision haute définition.

En effet en supposant qu'il soit nécessaire d'avoir un débit de 250 Mb/s un programme d'une heure de télévision correspond à environ $10^{12}$ bits soit une surface de 400 à 500 cm$^2$. Un disque de 30 cm de diamètre dont la surface utile est comprise entre $R_1 = 15$ cm et $R_2 = 3$ cm offre une surface utile de 675 cm$^2$. Il devient possible de stocker un programme de TVHD compris entre 80 et 100 minutes par face. Cependant, pour des facilités d'arrêt sur image, de ralenti ou d'accéléré, il peut être souhaitable qu'une image corresponde à un nombre entier de tours. Compte tenu de la densité linéique, il faut 10 pistes sur le rayon intérieur. Si l'on conserve cet arrangement (10 pistes/image) sur l'ensemble du disque de 30 cm, la durée du programme devient égale à 40 minutes par face.

L'emploi de support d'informations avec de telles densités surfaciques d'informations peut être également très intéressant dans le domaine du son numérique. En effet, en supposant qu'il soit nécessaire de disposer de $10^2$ kbits/s pour stocker du son numérique la surface utile pour stocker 1 heure de son numérique devient égale à 0,2 cm$^2$. Une configuration de type mini compact disque de quelques centimètres de diamètre peut permettre de stocker des programmes de plusieurs heures.

Actuellement la lecture d'informations de très petites dimensions très rapprochées nécessite impérativement d'utiliser des sources de faibles longueurs d'onde (par exemple source bleue) afin d'éviter au maximum la lecture simultanée de plusieurs informations due à la largeur de la tache de focalisation du faisceau de lecture. C'est pourquoi la présente invention exploite au maximum également la non linéarité de certains matériaux pour la lecture d'informations de façon à ce que seule la partie centrale de la tache de focalisation du faisceau de lecture puisse lire des informations de dimensions inférieures à la tache de focalisation. Il devient possible avec le procédé de lecture selon l'invention de lire avec un faisceau de lecture émettant à L des informations de dimensions nettement inférieures à L. Dans le cas d'informations inscrites selon le procédé d'écriture de l'invention, la longueur d'onde du faisceau de lecture peut même être supérieure à la longueur d'onde du faisceau d'écriture.

Ainsi pour la lecture de supports d'informations selon l'invention ou pour tout autre support d'informations stockées avec des densités surfaciques très élevées, l'invention propose de coupler la couche de matériau contenant les informations à une couche de matériau susceptible d'être le siège d'émission stimulée. En effet, intrinsèquement les phénomènes d'émission stimulée ont des comportements non linéaires. On choisit donc un matériau (Ma) dans lequel les informations préalablement inscrites sont transparentes à la longueur d'onde de lecture $L_1$ du faisceau de lecture, qui en irradiant le matériau (Mb) ne génère que très localement une émission stimulée à la longueur d'onde $L_2$ là où la densité de puissance du faisceau à $L_1$ est supérieure à la densité de puissance seuil au-delà de laquelle il y a émission stimulée. Le matériau (Mb) peut être de nature variée, il peut s'agir d'un polymère dopé avec de la rhodamine par exemple, en effet la densité de puissance seuil d'un tel matériau est de l'ordre de 100 kW/cm$^2$. Un laser émettant à la longueur d'onde $L_1$ quelques mW peut se focaliser sur une tache de lumière de 0,5 µm de dimension et est capable de provoquer une émission stimulée permettant de révéler les informations stockées dans le matériau (Ma).

Le matériau (Mb) peut également être un semi-conducteur de type arséniure de gallium émettant dans le proche infrarouge.

Le matériau Mb peut également être constitué d'un verre ou d'un cristal dopé avec une terre rare (Néodyne en particulier) et susceptible d'émettre un rayonnement dans le proche infrarouge.

Le choix du laser de lecture est imposé par la nature du matériau Mb choisi. Sa longueur d'onde doit être située dans les bandes d'absorption du matériau Mb de manière à induire l'émission du matériau Mb, à une longueur d'onde différente, en général supérieure à celle du laser de lecture. Le procédé de lecture est ainsi très différent des procédés de lecture des médias optiques connus de l'homme de l'art, dans la mesure où la lecture n'est pas obtenue par diffraction du faisceau de lecture par les éléments d'informations, mais par émission lumineuse du média lui-même à une longueur d'onde différente de celle du faisceau de lecture.

La lecture peut aussi être effectuée avec un matériau doubleur de fréquence émettant à L1/2. Il existe à l'heure actuelle des matériaux organiques de type polymères présentant de bonnes propriétés optiques non linéaires en doublement de fréquence et dont la mise en oeuvre et le coût sont particulièrement avantageux.

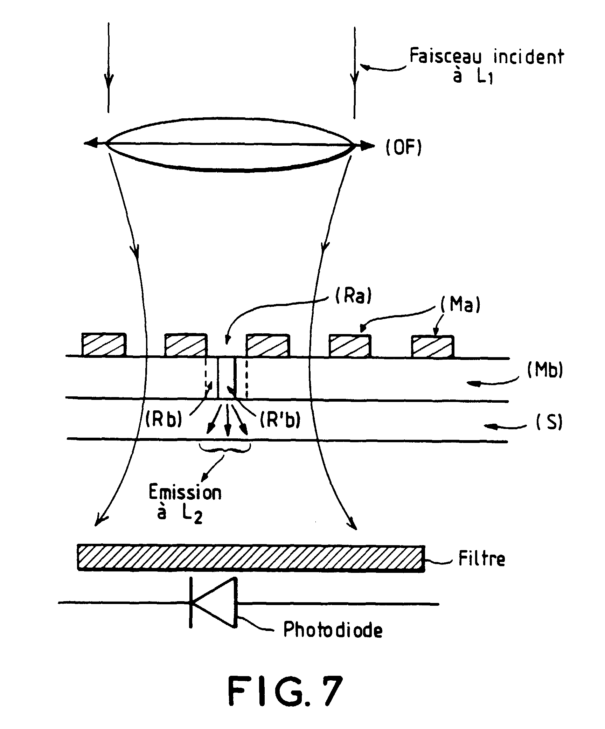

La figure 7 illustre un exemple de dispositif utilisant un support d'informations selon l'invention. Ce support est constitué par une couche de métal et les informations stockées sont des trous dans cette couche. Cette couche est superposée à un film de polymère (Mb) type polymethylmetacrylate de méthyle dopé avec de la rhodamine, ce film de matériau (Mb) étant lui-même déposé sur un substrat transparent. Le procédé de lecture est effectué en transmission, un faisceau laser est focalisé à l'aide d'un objectif (OF) sur le film de polymère, les éléments métalliques non gravés à l'inscription servent de masque au faisceau incident de lecture émettant à la longueur d'onde $L_1$. Seules les régions Rb du matériau (Mb) qui sont en regard des régions Ra séparant dans le cas présent deux plots métalliques reçoivent intégralement le faisceau incident émettant à $L_1$, de plus la densité de puissance reçue dans une région Rb est telle que seule les régions R'b des régions Rb reçoivent une densité de puissance suffisante pour générer une émission stimulée à la longueur d'onde $L_2$. Les régions du matériau (Ma) différentes des régions Ra bien que recevant le faisceau incident de lecture, ne transmettent qu'une densité de puissance focalisée inférieure à la densité de puissance seuil du matériau (Mb) et ne peuvent ainsi générer une émission stimulée au niveau de ce matériau. Ce procédé de lecture permet de discriminer une information et une information voisine même si celles-ci sont de très petites dimensions (inférieure à 0,2 $\mu$m) et séparées d'une distance très faible (inférieure à 0,2 $\mu$m).

On peut disposer en sortie du substrat un filtre ne laissant passer que la longueur d'onde d'émission $L_2$. Le signal filtré peut être recueilli par une photodiode de manière à restituer le signal stocké.

**Revendications**

1.  Support d'informations comprenant un substrat et une première couche de matériau (Ma) à sensibilité optique fortement non linéaire dans laquelle sont inscrites des informations, caractérisé en ce que la première couche de matériau (Ma) est déposée à la surface d'une seconde couche de matériau (Mb) capable de générer une émission stimulée, ledit matériau (Mb) de la seconde couche étant déposé sur le substrat.

2.  Support d'informations selon la revendication 1, caractérisé en ce que le matériau (Ma) de la première couche est une couche métallique susceptible d'être vaporisée localement.

3.  Support d'informations selon la revendication 2, caractérisé en ce que le matériau (Mb) de la seconde couche est un polymère de type polyméthylmétacrylate dopé avec de la rhodamine.

4.  Support d'information selon la revendication 2, caractérisé en ce que le matériau (Mb) de la seconde couche est un semiconducteur de type arséniure de gallium.

5.  Support d'informations selon la revendication 2, caractérisé en ce que le matériau (Mb) de la seconde couche est un verre ou un cristal dopé avec une terre rare.

6.  Procédé de lecture optique d'un support d'informations comprenant une première couche de matériau (Ma) présentant une sensibilité optique fortement non linéaire, dans laquelle sont inscrites des informations dans des premières régions (Ra) transparentes à une longueur d'onde ($L_1$), superposée à une seconde couche de matériau (Mb) capable de générer une émission stimulée, caractérisé en ce qu'il comprend les étapes suivantes :

    -   la focalisation d'un faisceau de lecture de longueur d'onde ($L_1$) à la surface de secondes régions (Rb) du matériau (Mb) de la seconde couche, lesdites secondes régions (Rb) étant en regard des premières régions (Ra) ;
    -   la détection d'une émission stimulée au niveau des secondes régions (Rb), de manière à détecter les informations inscrites dans les premières régions (Ra).

7.  Procédé de lecture optique selon la revendication 6, caractérisé en ce que la focalisation du faisceau de lecture à la longueur d'onde ($L_1$) est telle que la densité de puissance au centre du faisceau dépasse la puissance seuil qui est la puissance au-delà de laquelle il y a émission stimulée dans le matériau de la seconde couche (Mb), uniquement dans une petite zone de surface plusieurs fois inférieure à la surface de la tâche de focalisation du faisceau laser sur la seconde couche de matériau (Mb).

**Patentansprüche**

1. Informationsträger mit einem Substrat und einer ersten Schicht aus einem Material (Ma) stark nicht-linearer optischer Empfindlichkeit, in dem Informationen registriert sind, dadurch gekennzeichnet, daß die erste Schicht aus dem Material (Ma) auf die Oberfläche einer zweiten Schicht aus einem Material (Mb) aufgebracht ist, das eine stimulierte Emission hervorrufen kann, wobei das Material (Mb) der zweiten Schicht auf das Substrat aufgebracht ist.

2. Informationsträger nach Anspruch 1, dadurch gekennzeichnet, daß das Material (Ma) der ersten Schicht eine metallische Schicht ist, die örtlich durch Verdampfen entfernt werden kann.

3. Informationsträger nach Anspruch 2, dadurch gekennzeichnet, daß das Material (Mb) der zweiten Schicht ein Polymer vom Typ Polymethylmethacrylat ist, das mit Rhodamin dotiert ist.

4. Informationsträger nach Anspruch 2, dadurch gekennzeichnet, daß das Material (Mb) der zweiten Schicht ein Halbleiter vom Typ Galliumarsenid ist.

5. Informationsträger nach Anspruch 2, dadurch gekennzeichnet, daß das Material (Mb) der zweite Schicht ein Glas oder ein mit einer seltenen Erde dotierter Kristall ist.

6. Verfahren zum optischen Auslesen eines Informationsträgers, der eine erste Schicht aus einem Material (Ma) mit einer stark nicht-linearen optischen Empfindlichkeit besitzt, in die Informationen in für eine Wellenlänge ($L_1$) transparenten ersten Zonen (Ra) eingeschrieben sind und die über einer zweiten Schicht eines Materials (Mb) liegt, das eine stimulierte Emission hervorrufen kann, dadurch gekennzeichnet, daß das Verfahren folgende Schritte enthält:

   - die Fokussierung eines Lesestrahls mit der Wellenlänge ($L_1$) auf die Oberfläche zweiter Zonen (Rb) des Materials (Mb) der zweiten Schicht, wobei diese zweiten Zonen (Rb) den ersten Zonen (Ra) gegenüberliegen,
   - Erfassung einer in Höhe der zweiten Zonen (Rb) stimulierten Emission, so daß die in den ersten Zonen (Ra) registrierten Informationen erfaßt werden.

7. Optisches Leseverfahren nach Anspruch 6, dadurch gekennzeichnet, daß die Fokussierung des Lesestrahls mit der Wellenlänge ($L_1$) so gewählt ist, daß die Leistungsdichte im Zentrum des Strahls die Schwelleistungsdichte übersteigt, die die Leistung ist, jenseits der eine stimulierte Emission in dem Material (Mb) der zweiten Schicht stattfindet, und zwar ausschließlich in einer kleinen Oberflächenzone, die ein Mehrfaches kleiner als die Oberfläche des Brennflecks des Laserstrahls auf der zweiten Materialschicht (Mb) ist.


**Claims**

1. Information carrier comprising a substrate and a first layer of material (Ma) with highly non-linear optical sensitivity in which information is written, characterized in that the first layer of material (Ma) is deposited on the surface of a second layer of material (Mb) capable of generating stimulated emission, the said material (Mb) of the second layer being deposited on the substrate.

2. Information carrier according to Claim 1, characterized in that the material (Ma) of the first layer is a metallic layer which is able to be vapourized locally.

3. Information carrier according to Claim 2, characterized in that the material (Mb) of the second layer is a polymer of polymethylmethacrylate type doped with rhodamine.

4. Information carrier according to Claim 2, characterized in that the material (Mb) of the second layer is a semiconductor of gallium arsenide type.

5. Information carrier according to Claim 2, characterized in that the material (Mb) of the second layer is a glass or a crystal doped with a rare earth.

6. Method for the optical reading of an information carrier comprising a first layer of material (Ma) exhibiting highly non-linear optical sensitivity, in which information is written in first regions (Ra) transparent to a wavelength ($L_1$), and which is overlaid on a second layer of material (Mb) capable of generating stimulated emission, characterized in that it comprises the following steps:

- the focusing of a reading beam of wavelength ($L_1$) on the surface of second regions (Rb) of the material (Mb) of the second layer, the said second regions (Rb) being opposite the first regions (Ra);
- the detection of stimulated emission from the second regions (Rb), so as to detect the information written in the first regions (Ra).

7. Method of optical reading according to Claim 6, characterized in that the focusing of the reading beam with the wavelength ($L_1$) is such that the power density at the centre of the beam exceeds the power threshold which is the power beyond which there is stimulated emission in the material of the second layer (Mb), only within a small zone several times less in area than the area of the focusing spot of the laser beam on the second layer of material (Mb).

FIG. 1a

FIG. 1b

FIG. 2

EP 0 519 768 B1

FIG. 3

FIG. 4

FIG.5

Laser (F)

(MO)

(OF)

(T) (C) (T)

(ZT)

(Ma)

substrat (S)

FIG.6

Faisceau incident
à $L_1$

(OF)

(Ra)

(Ma)

(Mb)

(Rb)   (R'b)

(S)

Emission
à $L_2$

Filtre

Photodiode

FIG. 7